# EUROPÄISCHE PATENTANMELDUNG

(11) **EP 2 221 590 A2**
(43) Veröffentlichungstag der Anmeldung: **25.08.2010**
(21) Anmeldenummer: 10000664.2
(22) Anmeldetag: 22.01.2010
(51) Int. Cl.: G01G 19/04, B65G 1/04

(54) **Regallager und Transporteinrichtung eines solchen Regallagers**

(30) Priorität: 04.02.2009 DE 102009007438
(71) Anmelder: STOPA Anlagenbau GmbH & Co. KG, 77855 Achern-Gamshurst (DE)
(72) Erfinder: Stotz, Heiko, 79618 Rheinfelden (DE); Herrmann, Stefan, 77652 Offenburg (DE)
(74) Vertreter: Lenz, Steffen

(57) **Zusammenfassung**

Es wird ein Regallager mit einer Mehrzahl an übereinander und/oder nebeneinander angeordneten Regalfächern, mit einer Mehrzahl an lasttragenden Plattformen, welche mittels Roll- oder Gleitmitteln in die Regalfächer einbringbar und aus diesen ausbringbar sind, und mit einer Transporteinrichtung vorgeschlagen, mittels welcher die Plattformen zwischen den Regalfächern und gegebenenfalls einer oder mehreren Belade-/Entladestationen verlagerbar sind. Die Transporteinrichtung weist ein Paar Schienen zur Aufnahme einer jeweils transportierten Plattform sowie eine Wiegeeinrichtung zur Erfassung des Gewichtes der Plattform auf. Um für einen schnellen Wiegevorgang bei hoher Exaktheit und konstruktiv einfachem Aufbau der Wiegeeinrichtung zu sorgen, ist erfindungsgemäß vorgesehen, daß letztere eine Mehrzahl an Wägezellen aufweist, welche jeweils oder paarweise ein von der Schiene mechanisch entkoppeltes, in einer Aussparung der Schiene angeordnetes und mit der Schiene im wesentlichen fluchtendes Schienenstück aufnehmen, wobei der Abstand der Wägezellen bzw. der Schienenstücke insbesondere etwa dem Abstand der Roll- oder Gleitmittel der Plattformen entspricht. Die Erfindung betrifft ferner eine für ein solches Regallager geeignete Transporteinrichtung.

## Beschreibung

Die Erfindung betrifft ein Regallager mit einer Mehrzahl an übereinander und/oder nebeneinander angeordneten Regalfächern, mit einer Mehrzahl an lasttragenden Plattformen, welche mittels Roll- oder Gleitmitteln in die Regalfächer einbringbar und aus diesen ausbringbar sind, und mit wenigstens einer Transporteinrichtung, mittels welcher die Plattformen zwischen den Regalfächern verlagerbar sind, wobei die Transporteinrichtung ein Paar Schienen zur Aufnahme einer jeweils transportierten Plattform sowie eine Wiegeeinrichtung zur Erfassung des Gewichtes der transportierten Plattform aufweist. Die Erfindung bezieht sich ferner auf eine insbesondere für ein Regallager der vorgenannten Art geeignete Transporteinrichtung zum Transportieren von mit Roll- oder Gleitmitteln ausgestatteten, lasttragenden Plattformen, wobei die Transporteinrichtung ein Paar Schienen zur Aufnahme einer jeweils transportierten Plattform sowie eine Wiegeeinrichtung zur Erfassung des Gewichtes der transportierten Plattform aufweist.

Regallager der vorgenannten Art sind zur Bevorratung von unterschiedlichsten Waren und Gütern, wie Blechen, Werkzeugen, Bau- und Konstruktionsteilen etc., oder auch in Verbindung mit automatischen Parkhäusern (EP 1 614 834 A2) bekannt. Sie umfassen in der Regel eine Vielzahl an matrixartig in Reihen und Spalten angeordneten Regalfächern, in welche die auch als Paletten bezeichneten Plattformen zur Aufnahme der jeweils auf Lager zu haltenden Gegenstände einbringbar und ausbringbar sind. Zum Transport der Plattformen zwischen den einzelnen Regalfächern und im allgemeinen auch einer oder mehreren Belade-/Entladestationen bzw. Einlager-/Auslagerstationen dient eine Transporteinrichtung, welche beispielsweise entlang einer Führung zwischen den Regalfächern und den genannten Stationen verlagerbar ist, was insbesondere in einer mittels einer Datenverarbeitungseinheit programmierbaren Weise geschehen kann. Die Transporteinrichtung selbst weist üblicherweise ein Paar Schienen zur Aufnahme einer jeweils transportierten Plattform auf, die ihrerseits mit sich hierauf abstützenden Roll- oder Gleitmitteln ausgestattet ist, um sie von einem jeweiligen Regalfach auf die Transporteinrichtung und umgekehrt auf- bzw. abzuladen. Zu diesem Zweck umfaßt die Transporteinrichtung häufig eine mit einem Kopplungsmittel der Plattformen lösbar verbindbare Verlagerungseinrichtung zur Verlagerung einer Plattform auf die Transporteinrichtung und von dieser fort, z.B. in Form eines motorisch angetriebenen, umlaufenden Ketten- oder Zahnriementriebes.

Die DE 20 2007 003 447 U1 beschreibt ein weiteres, mit einer entlang Schienen verfahrbaren Transporteinrichtung ausgestattetes Regallager, mit einer Mehrzahl an lasttragenden Plattformen bzw. Behältern zur Aufnahme von Lagergut. Eine Be-/Entladestation ist mit einer Rollenbahn ausgestattet, um einen jeweiligen von der bzw. an die Transporteinrichtung übergebenen Behälter in einfacher Weise weitertransportieren zu können.

In vielen Fällen ist es erwünscht, daß die Transporteinrichtung zusätzlich das Gewicht einer jeweils transportierten Plattform oder Palette zu ermitteln vermag, was nicht nur im Hinblick auf eine Erfassung des gesamten Lagerbestandes, wie beispielsweise anläßlich einer Inventur, sondern auch während des "normalen" Betriebs des Regallagers zweckmäßig ist, um unmittelbar Informationen darüber zu erhalten, wie viele und/oder welche Waren gerade von der Transporteinrichtung verlagert, z.B. eingelagert oder über eine Auslagerstation einer Bearbeitung zugeführt werden. Zu diesem Zweck sind aus dem Stand der Technik Wiegeeinrichtungen bekannt, welche mehrere Wägeelemente umfassen. Je ein Wägeelement ist im Bereich des freien Endes einer hydraulisch, pneumatisch oder motorisch betätigbaren Kolben-/Zylindereinheit einer Hubeinheit der Transporteinrichtung angeordnet, so daß eine auf dem Schienenpaar der Transporteinrichtung befindliche Plattform durch gemeinsame Betätigung der Kolben-/Zylindereinheiten angehoben werden kann, damit die hierauf befindlichen Wägeelemente das Gewicht der Plattform erfassen können. Die Wägeelemente sind mit einer elektronischen Datenverarbeitungseinheit verbunden, welche mittels bekannter Algorithmen anhand des von einem jeden Wägeelement ermittelten Teilgewichtes unabhängig von der auf die Plattform wirkenden Lastverteilung (d.h. unabhängig von der Anordnung der Last im wesentlichen zentral oder im Randbereich der Plattform) das Gesamtgewicht der Plattform errechnet.

Ein Regallager mit einer Transporteinrichtung, welche mit einer im wesentlichen entsprechend der vorgenannten Art ausgebildeten Wiegeeinrichtung ausgestattet ist, ist beispielsweise der DE 297 22 170 U1 zu entnehmen.

Zwar besitzt die bekannte Lösung im Falle des Einsatzes von präzisen Wägeelementen eine sehr hohe Meßgenauigkeit, doch besteht ein Nachteil insbesondere in dem verhältnismäßig hohen konstruktiven Aufwand der Wiegeeinrichtung. Darüber hinaus erfordert jeder Wiegevorgang relativ viel Zeit (Anheben der Plattform, Wiegen der Plattform, Absenken der Plattform), in welcher die Transporteinrichtung für weitere Arbeitsvorgänge nicht zur Verfügung steht.

Der Erfindung liegt die Aufgabe zugrunde, ein Regallager sowie eine hierfür geeignete Transporteinrichtung der eingangs genannten Art auf einfache und kostengünstige Weise dahingehend weiterzubilden, daß den vorgenannten Nachteilen begegnet wird.

Erfindungsgemäß wird diese Aufgabe bei einem Regallager sowie bei einer für ein solches geeigneten Transporteinrichtung der eingangs genannten Art dadurch gelöst, daß die Wiegeeinrichtung der Transporteinrichtung eine Mehrzahl an Wägezellen aufweist, welche jeweils oder paarweise ein von der Schiene mechanisch entkoppeltes, in einer Aussparung der Schiene angeordnetes und mit der Schiene im wesentlichen fluchtendes Schienenstück aufnehmen.

Die erfindungsgemäße Ausgestaltung macht die zum Anheben einer auf der Transporteinrichtung befindlichen Plattform gemäß dem Stand der Technik vorgesehene Hubeinrichtung entbehrlich, indem die jeweilige Plattform so auf den Schienen der Transporteinrichtung angeordnet werden kann, daß sich ihre Roll- oder Gleitmittel auf den Schienenstücken der Wägezellen befinden, so daß letztere unmittelbar das Gewicht der Plattform erfassen können. Entsprechend dem Stand der Technik kann mittels als solcher bekannter Algorithmen anhand dem von einer jeden Wägezelle bzw. von einem jeden Paar Wägezellen, welche(s) einem jeweiligen Schienenstück zugeordnet ist/sind, ermittelten Teilgewicht unabhängig von der auf die Plattform wirkenden Lastverteilung (d.h. unabhängig von der Anordnung der Last im wesentlichen zentral oder im Randbereich der Plattform) das Gesamtgewicht der Plattform errechnet werden. In diesem Zusammenhang sei lediglich exemplarisch erwähnt, daß die einem jeweiligen Schienenstück zugeordnete(n) Wägezelle(n) ein beispielsweise analoges Ausgangssignal einer Spannung, z.B. im Bereich von 0 bis etwa 60 mV, liefern, welches proportional zu dem zu messenden Gewicht ist. Solche Ausgangssignale können dann z.B. in einer sogenannten Wheatstone'schen Meßbrücke in einer Auswerteeinheit zusammengeführt werden, wobei die Brückenspannung das Maß für das Gesamtgewicht ergibt, welches letztlich abhängig von wiegeaufgabenspezifischen Eingabeparametern errechnet und in dem gewünschten Format ausgegeben werden kann.

Aufgrund des Einsatzes von Wägezellen läßt sich ein sehr exaktes Meßergebnis mit einer Genauigkeit von weit weniger als ± 0,1%, z.B. im Bereich von etwa ± 0,02%, erhalten. Die erfindungsgemäß eingesetzten Wägezellen können dabei praktisch beliebige Federkörper, wie beispielsweise in Form von Scherstäben, Doppelbiegebalken, Säulen, Ringtorsionsfedern, Membranen oder dergleichen, besitzen. Mit "mechanischer Entkopplung" der mit den Wägezellen verbundenen Schienenstücke von den übrigen Schienen ist im übrigen gemeint, daß eine Übertragung von Kräften, wie Kontakt- oder Reibkräften, zwischen den Schienenstücken und den übrigen Schienen verhindert wird, was beispielsweise durch das Vorhandensein eines Spaltes zwischen den Schienenstücken und den übrigen Schienen sichergestellt sein kann. Die Spaltbreite kann zweckmäßig zwischen etwa 0,1 mm und etwa 1 mm, z.B. etwa 0,35 mm, betragen.

Wie eingangs angedeutet, können die Plattformen selbstverständlich nicht nur zwischen den einzelnen Regalfächern verlagerbar sein, sondern können diese mittels der wenigstens einen Transporteinrichtung ferner zwischen den Regalfächern und einer oder mehreren Belade-/Entladestationen verlagerbar sein.

Darüber hinaus ist es zweckmäßig, wenn der Abstand der Wägezellen und/oder der Schienenstücke etwa dem Abstand der Roll- oder Gleitmittel der Plattformen entspricht.

In zweckmäßiger Ausgestaltung kann vorgesehen sein, daß die Plattformen vier Roll- oder Gleitmittel aufweisen und eine jede Schiene des Schienenpaares zwei von einer Wägezelle oder einem Paar Wägezellen aufgenommene Schienenstücke aufweist, wobei selbstverständlich, z.B. im Falle von relativ langen, zur Aufnahme von sehr schweren Lasten vorgesehenen Plattformen, auch mehr als vier von Wägezellen getragene Schienenstücke vorgesehen sein können, sofern die Plattform insbesondere mit mehr als vier Roll- oder Gleitmitteln versehen ist. Im Hinblick auf ein sehr genaues Meßergebnis ist es indes von Vorteil, wenn die Anzahl an mit der erfindungsgemäßen Wiegefunktion ausgestatteten Schienenstücken zumindest der Anzahl an Roll- oder Gleitmitteln der Plattformen entspricht, so daß das auf jedes Roll- oder Gleitmittel wirkende Teilgewicht der Plattform erfaßt werden kann, um hieraus deren Gesamtgewicht errechnen zu können. Wie bereits erwähnt, kann dabei einem jeden Schienenstück eine Wägezelle oder auch ein Paar Wägezellen zugeordnet sein, d.h. die Anzahl an Wägezellen entspricht z.B. dem einfachen oder dem doppelten der Anzahl an Schienenstücken, wobei letztgenannte Variante mit jeweils zwei einem Schienenstück zugeordneten Wägezellen aus Gründen der statischen Bestimmtheit der Konstruktion günstig sein kann.

Gemäß einer vorteilhaften Ausgestaltung der Erfindung kann vorgesehen sein, daß zumindest einige der Schienenstücke und/oder der Wägezellen derselben - insbesondere der Wägezellen unterschiedlicher Schienenstücke - starr miteinander verbunden sind. Auf diese Weise läßt sich auf einfache Weise die bei Wägezellen oft übliche Eckenlastabhängigkeit (d.h. der Meßfehler der Wägezelle wird um so größer, je exzentrischer das zu messende Gewicht auf ihren Federkörper einwirkt) kompensieren, indem die Wägezellen durch die starre Verbindung zwischen denselben versteift werden. Darüber hinaus wird auf diese Weise sichergestellt, daß die mit den Wägezellen verbundenen, mechanisch entkoppelten Schienenstücke infolge exzentrischer Belastung nicht um eine horizontale Achse senkrecht zur Erstreckungsrichtung der Schienen verschwenkt bzw. gekippt werden, bis sie an die übrigen Schienen oder an andere starre Teile der Transporteinrichtung anstoßen, was ebenfalls das Meßergebnis beeinträchtigen könnte.

In diesem Zusammenhang können insbesondere zumindest die Schienenstücke und/oder die Wägezellen derselben, welche ein und derselben Schiene des Schienenpaares zugeordnet sind, starr miteinander verbunden sein, wobei es selbstverständlich auch grundsätzlich möglich ist, daß sämtliche Schienenstücke und/oder Wägezellen derselben starr miteinander verbunden sind.

Um aus den genannten Gründen auch ein Verschwenken bzw. Kippen der Wägezellen bzw. der diesen zugeordneten Schienenstücke um eine horizontale Achse parallel zur Erstreckungsrichtung der Schienen zu verhindern, kann gemäß einer vorteilhaften Ausgestaltung ferner vorgesehen sein, daß die Roll- oder Gleitmittel der Plattformen eine konvex gewölbte oder ebene Außenkontur aufweisen, um die Schienenstücke unter Last horizontal auszurichten. Auf diese Weise wird eine jegliche exzentrische Krafteinwirkung auf die den jeweiligen Schienenstücken zugeordnete Wägezelle zuverlässig verhindert und folglich eine größtmögliche Genauigkeit des Meßergebnisses erzielt.

In weiterhin bevorzugter Ausführung können die Roll- oder Gleitmittel der Plattformen einen zumindest eine Außenkante der Schienen hintergreifenden Führungsabschnitt aufweisen, so daß stets für eine korrekte Relativanordnung einer transportierten Plattform in Bezug auf die Schienen der Transporteinrichtung ohne seitlichen Versatz gesorgt ist, welcher wiederum das Meßergebnis der Wägezellen negativ beeinflussen könnte. Sind die Plattformen beispielsweise mit Rollen ausgestattet, so kann der Führungsabschnitt z.B. in Form eines Spurkranzes mit einem größeren Durchmesser als der der Rollen ausgebildet sein, welcher sich an einer Seite der Schienen abzustützen vermag.

Sofern die Roll- oder Gleitmittel insbesondere einen eine Außenkante der Schienen der Transporteinrichtung hintergreifenden Führungsabschnitt aufweisen, kann zu Stabilisierungszwecken während der Verlagerung einer Plattform über die den Wägezellen zugeordneten Schienenstücken hinweg ferner vorgesehen sein, daß das Schienenstück einer jeden Wägezelle oder eines jeden Paare von Wägezellen zumindest eine als Widerlager für Querkräfte (also im wesentlichen senkrecht zur Erstreckungsrichtung der Schienen wirkende Kräfte) dienende Stützfläche mit einer senkrecht zur Erstreckungsrichtung der Schiene angeordneten Erstreckungsrichtungskomponente aufweist, welche mit einer hierzu im wesentlichen komplementären Stützfläche der zugehörigen Aussparung der Schiene zusammenwirkt. Die jeweilige Stützfläche des Schienenstückes der Wägezelle und/oder die hierzu komplementäre Stützfläche der Aussparung der Schiene ist/sind dabei zweckmäßig derart ausgebildet, daß sie von dem Führungsabschnitt der Roll- oder Gleitmittel der Plattformen bewirkte seitliche Andruckkräfte an das Schienenstück aufzunehmen vermag/vermögen, so daß sich im Falle von insbesondere durch den Führungsabschnitt der Roll- oder Gleitmittel auf die Schienenstücke bewirkten Querkräften letztere mittels solcher Stützflächen an den hierzu komplementären Stützflächen der Schienen abstützen können und die hieraus resultierende Gefahr einer Beschädigung der Wägezellen zuverlässig verhindert wird. Die Stützflächen können zu diesem Zweck beispielsweise zumindest teilweise unter einem endlichen Winkel, schräg in Bezug auf die Erstreckungsrichtung der Schienen verlaufen.

Während die Plattformen grundsätzlich z.B. auch mit motorisch und insbesondere gesteuert angetriebenen Rollmitteln ausgestattet sein können, kann die Transporteinrichtung vorzugsweise eine mit einem Kopplungsmittel der Plattformen lösbar verbindbare Verlagerungseinrichtung zur Verlagerung einer Plattform auf die Transporteinrichtung und von dieser fort aufweisen, um eine jeweilige Plattform mittels der Verlagerungseinrichtung auf die Transporteinrichtung auf- und von dieser abzuladen, wie beispielsweise zwischen der Transporteinrichtung und einem Regalfach des Regallagers. Die Verlagerungseinrichtung der Transporteinrichtung ist hierbei in bevorzugter Ausführung derart steuerbar, daß sie eine hiermit gekoppelte Plattform mit deren Roll- oder Gleitmittel entlang der Schienen bis auf die Schienenstücke der Wägezellen verlagert und dort abstellt, so daß sichergestellt ist, daß sich die Roll- oder Gleitmittel einer auf der Transporteinrichtung befindlichen Plattform stets in der korrekten Position auf den Schienenstücken der Wägezellen befinden. Dies kann beispielsweise mittels geeigneter Positionssensoren geschehen, die an eine zur Steuerung der Verlagerungseinrichtung vorgesehene elektronische Datenverarbeitungseinheit angeschlossen sind.

Weitere Einzelheiten und Vorteile der Erfindung ergeben sich aus der nachfolgenden Beschreibung eines Ausführungsbeispiels unter Bezugnahme auf die Zeichnungen. Dabei zeigen:
- Fig. 1: eine perspektivische Ansicht einer Schiene einer Ausführungsform einer erfindungsgemäßen Trans- porteinrichtung mit einer hierauf getragenen Plattform;
- Fig. 2: eine Detailansicht der Schiene der Transportein- richtung gemäß Fig. 1 im Bereich einer Wägezelle ihrer Wiegeeinrichtung in vergrößertem Maßstab;
- Fig. 3: eine schematische Seitenansicht der Transportein- richtung gemäß Fig. 1 und 2; und
- Fig. 4: eine schematische Frontansicht der Transportein- richtung gemäß Fig. 1 und 2.

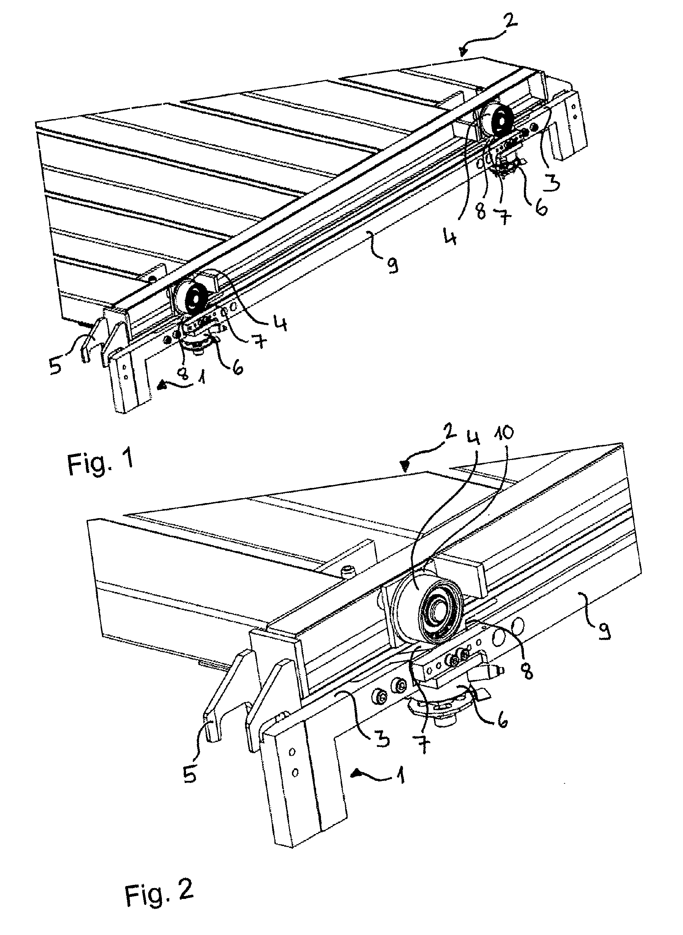

In Fig. 1 ist ein Ausführungsbeispiel einer Transporteinrichtung 1 eines im übrigen nicht gezeigten und als solchem bekannten Regallagers mit einer Mehrzahl an übereinander und/oder nebeneinander angeordneten Regalfächern wiedergegeben, welche eine einer Mehrzahl an lasttragenden Plattformen 2 bzw. Paletten trägt. Die Transporteinrichtung 1 kann in bekannter Weise z.B. entlang einer zwischen den Regalfächern angeordneten Führung verlagerbar sowie höhenverstellbar sein, um die Plattformen 2 zwischen den verschiedenen Regalfächern sowie einer oder mehreren Belade-/Entladestationen (ebenfalls nicht gezeigt) für die Plattformen 2 zu transportieren.

Um die Plattformen 2 auf die Transporteinrichtung 1 zu überführen (z.B. Ausschieben der Plattform 2 aus einem Regalfach auf die neben dem Regalfach positionierte Transporteinrichtung 1) und wieder zu entfernen (z.B. Einschieben der Plattform 2 von der neben dem Regalfach positionierten Transporteinrichtung in ein Regalfach), können die Plattformen 2 mit Roll- oder Gleitmitteln versehen sein, wobei sie beim vorliegenden Ausführungsbeispiel mit Rollen 4 ausgestattet sind, welche z.B. im Bereich der Ecken der hier im wesentlichen rechteckigen Plattformen 2 angeordnet sind. Die Rollen 4 können insbesondere passiv bzw. antriebslos sein, aber gegebenenfalls einen Blockiermechanismus besitzen, um ein Wegrollen der Plattformen 2, z.B. beim Beladen/Entladen oder dergleichen, zu verhindern. Die Transporteinrichtung 1 weist ihrerseits ein Paar von parallel im Bereich ihrer Längsseiten angeordneten Schienen 3 auf, welche zur Aufnahme der jeweils transportierten Plattform 2 dienen und deren Abstand etwa dem Abstand der Rollen 4 der Plattformen 2 entspricht, so daß letztere auf den Schienen 3 entlang rollen können. Darüber hinaus umfaßt die Transporteinrichtung 1 eine zeichnerisch nicht näher wiedergegebene Verlagerungseinrichtung, welche mit einem z.B. etwa hakenförmigen Kopplungsmittel 5 der Plattformen 2 lösbar verbindbar ist, um eine Plattform 2 auf das Schienenpaar 3 der Transporteinrichtung 2 auf und von dieser fort verlagern zu können. Die Verlagerungseinrichtung kann beispielweise einen gesteuert motorisch angetriebenen, umlaufenden Ketten- oder Zahnriementrieb umfassen, welcher mit Mitnehmern bestückt ist, die in das Kopplungsmittel 5 der Plattformen 2 eingreifen können.

Wie aus Fig. 1 und insbesondere auch aus Fig. 2 ersichtlich, weist die Transporteinrichtung 1 eine Wiegeeinrichtung zur Erfassung des Gewichtes einer jeweiligen transportierten Plattform 2 auf, welche eine Mehrzahl - hier vier entsprechend der Anzahl an Rollen 4 der Plattformen - an Wägezellen 6 aufweist. Jede Wägezelle 6 ist unterhalb jeweils eines von der Schiene 3 mechanisch entkoppelten, in jeweils einer Aussparung der Schiene 3 angeordneten und mit dieser fluchtenden Schienenstückes 7 positioniert, welches von der zugehörigen Wägezelle 6 getragen ist. Alternativ können die Schienenstücke 7 auch jeweils von einem Paar Wägezellen getragen sein (nicht dargestellt). Der Abstand der entlang beider Schienen 3 angeordneten Wägezellen 6 bzw. der diesen zugeordneten Schienenstücke 7 entspricht dem Abstand der Rollen 4 der Plattformen 2, so daß eine von der Transporteinrichtung 1 getragene Plattform 2 derart angeordnet werden kann, daß sich eine jede ihrer Rollen 4 auf eines der Schienenstücke 7 der Wägezellen 6 stützt. Auf diese Weise vermag jede Wägezelle 6 ein Teilgewicht der Plattform 2 zu erfassen, wobei sich deren Gesamtgewicht mit sehr hoher Genauigkeit, z.B. im Bereich von etwa ± 0,01%, mittels geeigneter und aus dem Stand der Technik bekannter Algorithmen errechnen läßt. Zur mechanischen Entkopplung der Schienenstücke 7 von der übrigen Schiene ist zwischen denselben ein Spalt 8 vorhanden, welcher hinreichend klein ist, um kein nennenswertes Hindernis beim Verlagern der Rollen 4 der Plattform 2 über den Spalt hinweg darzustellen, und welcher hinreichend groß ist, um keine Reibungskräfte zwischen den Schienenstücken 7 und der übrigen Schiene 3 zu übertragen, welche das Meßergebnis beeinträchtigen könnten. Die den Spalt 8 begrenzenden Flächen der Schienenstücke 7 und der Schiene 3 können darüber hinaus mit einem Material mit geringem Reibungskoeffizient, wie beispielsweise Polytetrafluorethylen (PTFE), beschichtet sein.

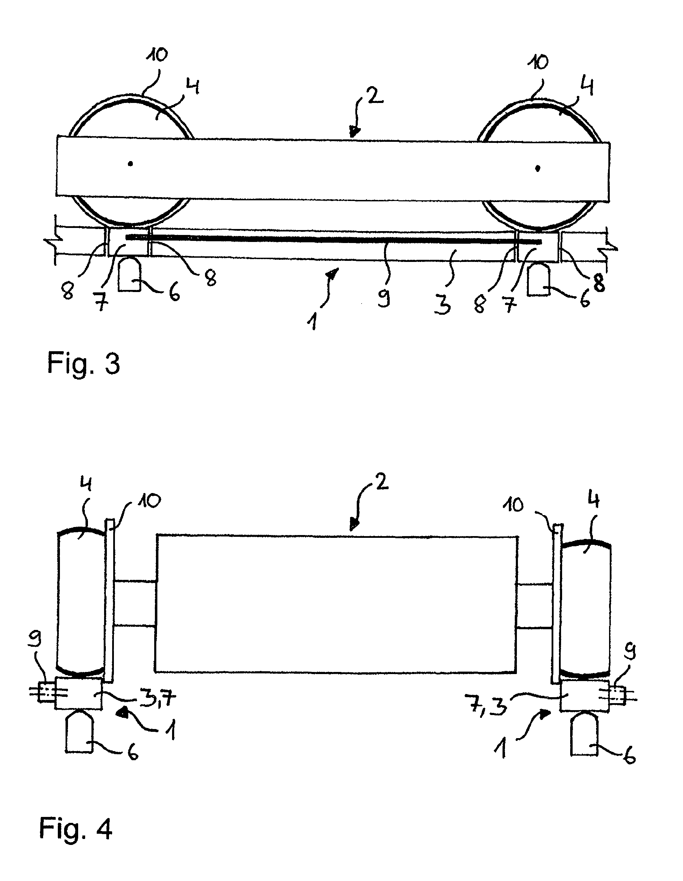

Um die gegenüber einer exzentrischen Kraftaufnahme oft störungsanfälligen Wägezellen 6 mechanisch zu stabilisieren, sind zumindest die beiden von letzteren getragenen Schienenstücke 7 von ein und derselben Schiene 3 - hier mittels einer von außen an die Schienenstücke 7 angeschraubten Stange 9 - starr miteinander verbunden, welche ihrerseits mit hinreichendem Abstand von der jeweiligen Schiene 3 angeordnet ist, um auch unter Last nicht mit dieser in Berührung zu treten. Auf diese Weise wird ein Kippen der Schienenstücke 7 bzw. der Meßaufnehmer der zugehörigen Wägezellen 6 um eine horizontale Achse senkrecht zur Erstreckungsrichtung der Schienen 3 zuverlässig verhindert (vgl. auch die schematische Darstellung gemäß Fig. 3).

Um darüber hinaus ein Kippen der Wägezellen 6 bzw. der diesen zugeordneten Schienenstücke 7 um eine horizontale Achse parallel zur Erstreckungsrichtung der Schienen 3 zuverlässig zu verhindern, ist die Außenkontur der Rollen 4 der Plattformen beim vorliegenden Ausführungsbeispiel derart konvex gekrümmt, daß die Rollen 4 mit den Schienenstücken 7 in deren Längsmittelbereich in Kontakt treten (vgl. die schematische Darstellung gemäß Fig. 4). Alternativ kann die Außenkontur der Rollen 4 zu demselben Zweck auch eben ausgebildet sein, d.h. die Rollen 4 weisen jeweils eine zylindrische Form auf (nicht dargestellt). Wie weiterhin der Fig. 4 sowie auch insbesondere der Fig. 2 zu entnehmen ist, sind die Rollen 4 der Plattformen 2 ferner mit einem z.B. die einander zugewandten Außenkanten der Schienen 3 hintergreifenden Führungsabschnitt in Form eines Spurkranzes 10 mit einem größeren Durchmesser als der der Rollen 4 ausgestattet, welcher sich seitlich an den Schienen 3 abzustützen vermag und stets eine korrekte, zentrierte Führung der Plattform 2 auf dem Schienenpaar 3 der Transporteinrichtung 1 sicherstellt.

Wie insbesondere der Fig. 2 zu entnehmen ist, sind die von den Wägezellen 6 getragenen Schienenstücke 7 mit als Widerlager für Querkräfte dienenden Stützflächen versehen, welche mit hierzu komplementären Stützflächen der zugehörigen Aussparung der Schiene 3 zusammenwirken und gemeinsam mit letzteren den Spalt 8 begrenzen. Die Stützflächen des Schienenstückes 7 der Wägezelle 6 bzw. die hierzu komplementäre Stützflächen der Aussparung der Schiene 3 sind derart ausgebildet ist, daß sie von dem Spurkranz 10 der Rollen 4 der Plattformen 2 bewirkte seitliche Andruckkräfte an das Schienenstück 7 aufzunehmen können und erstrecken sich beim vorliegenden Ausführungsbeispiel schräg von innen nach außen, so daß die Schienenstücke 7 etwa trapezförmig ausgebildet sind, wobei die kürzere der beiden parallelen Seiten dieses Trapezes im Bereich der dem Spurkranz 10 abgewandten Längsseite der Schiene 3 angeordnet ist, während die längere der beiden parallelen Trapezseiten dem Spurkranz 10 zugewandt ist. Auf diese Weise können insbesondere durch die Spurkränze 10 der Rollen 4 auf die Schienenstücke 7 während des Rollens bewirkte Querkräfte über die Stützflächen auf die Schienen 3 übertragen werden, ohne daß die Gefahr einer Beschädigung der Wägezellen 6 infolge seitlicher Belastung der hiervon getragenen Schienenstücke 7 besteht.

## Patentansprüche

1. Regallager mit einer Mehrzahl an übereinander und/oder nebeneinander angeordneten Regalfächern, mit einer Mehrzahl an lasttragenden Plattformen (2), welche mittels Roll- (4) oder Gleitmitteln in die Regalfächer einbringbar und aus diesen ausbringbar sind, und mit wenigstens einer Transporteinrichtung (1), mittels welcher die Plattformen (2) zwischen den Regalfächern verlagerbar sind, wobei die Transporteinrichtung (1) ein Paar Schienen (3) zur Aufnahme einer jeweils transportierten Plattform (2) sowie eine Wiegeeinrichtung zur Erfassung des Gewichtes der transportierten Plattform (2) aufweist, **dadurch gekennzeichnet, daß** die Wiegeeinrichtung der Transporteinrichtung (1) eine Mehrzahl an Wägezellen (6) aufweist, welche jeweils oder paarweise ein von der Schiene (3) mechanisch entkoppeltes, in einer Aussparung der Schiene (3) angeordnetes und mit der Schiene (3) im wesentlichen fluchtendes Schienenstück (7) aufnehmen.

2. Regallager nach Anspruch 1, **dadurch gekennzeichnet, daß** die Plattformen (2) mittels der wenigstens einen Transporteinrichtung (1) ferner zwischen den Regalfächern und einer oder mehreren Belade-/Entladestationen verlagerbar sind.

3. Regallager nach Anspruch 1 oder 2, **dadurch gekennzeichnet, daß** der Abstand der Wägezellen (6) und/oder der Schienenstücke (7) etwa dem Abstand der Roll- (4) oder Gleitmittel der Plattformen (2) entspricht.

4. Regallager nach einem der Ansprüche 1 bis 3, **dadurch gekennzeichnet, daß** die Plattformen (2) vier Roll- (4) oder Gleitmittel aufweisen und eine jede Schiene (3) des Schienenpaares zwei von einer Wägezelle (6) oder einem Paar Wägezellen (6) aufgenommene Schienenstücke (7) aufweist.

5. Regallager nach einem der Ansprüche 1 bis 4, **dadurch gekennzeichnet, daß** zumindest einige der Wägezellen (6) und/oder der Schienenstücke (7) derselben starr miteinander verbunden sind.

6. Regallager nach Anspruch 5, **dadurch gekennzeichnet, daß** zumindest die Wägezellen (6) und/oder die Schienenstücke (7) derselben, welche ein und derselben Schiene (3) des Schienenpaares zugeordnet sind, starr miteinander verbunden sind.

7. Regallager nach einem der Ansprüche 1 bis 6, **dadurch gekennzeichnet, daß** die Roll- (4) oder Gleitmittel der Plattformen (2) eine konvex gewölbte oder ebene Außenkontur aufweisen.

8. Regallager nach einem der Ansprüche 1 bis 7, **dadurch gekennzeichnet, daß** die Roll- (4) oder Gleitmittel der Plattformen (2) einen zumindest eine Außenkante der Schienen (3) hintergreifenden Führungsabschnitt (10) aufweisen.

9. Regallager nach einem der Ansprüche 1 bis 8, **dadurch gekennzeichnet, daß** das Schienenstück (7) einer jeden Wägezelle oder eines jeden Paares von Wägezellen (6) zumindest eine als Widerlager für Querkräfte dienende Stützfläche mit einer senkrecht zur Erstreckungsrichtung der Schiene (3) angeordneten Erstreckungsrichtungskomponente aufweist, welche mit einer hierzu im wesentlichen komplementären Stützfläche der zugehörigen Aussparung der Schiene (3) zusammenwirkt.

10. Regallager nach Anspruch 8 und 9, **dadurch gekennzeichnet, daß** die Stützfläche des Schienenstückes (7) der Wägezelle (6) und/oder die hierzu komplementäre Stützfläche der Aussparung der Schiene (3) derart ausgebildet ist/sind, daß sie von dem Führungsabschnitt (10) der Roll- (4) oder Gleitmittel der Plattformen (2) bewirkte seitliche Andruckkräfte an das Schienenstück (7) aufzunehmen vermag/vermögen.

11. Regallager nach einem der Ansprüche 1 bis 10, **dadurch gekennzeichnet, daß** die Transporteinrichtung (1) ferner eine mit einem Kopplungsmittel (5) der Plattformen (2) lösbar verbindbare Verlagerungseinrichtung zur Verlagerung einer Plattform (2) auf die Transporteinrichtung (1) und von dieser fort aufweist.

12. Regallager nach Anspruch 11, **dadurch gekennzeichnet, daß** die Verlagerungseinrichtung der Transporteinrichtung (1) derart steuerbar ist, daß sie eine hiermit gekoppelte Plattform (2) mit deren Roll- (4) oder Gleitmittel entlang der Schienen (3) bis auf die Schienenstücke (7) der Wägezellen (6) verlagert und dort abstellt.

13. Transporteinrichtung (1) zum Transportieren von mit Roll- (4) oder Gleitmitteln ausgestatteten, lasttragenden Plattformen (2), insbesondere für ein Regallager nach einem der vorangehenden Ansprüche, wobei die Transporteinrichtung (1) ein Paar Schienen (3) zur Aufnahme einer jeweils transportierten Plattform (2) sowie eine Wiegeeinrichtung zur Erfassung des Gewichtes der transportierten Plattform (2) aufweist, **dadurch gekennzeichnet, daß** die Wiegeeinrichtung der Transporteinrichtung (1) eine Mehrzahl an Wägezellen (6) aufweist, welche jeweils oder paarweise ein von der Schiene (3) mechanisch entkoppeltes, in einer Aussparung der Schiene (3) angeordnetes und mit der Schiene (3) im wesentlichen fluchtendes Schienenstück (7) aufnehmen.

14. Transporteinrichtung nach Anspruch 13, **gekennzeichnet durch** die Merkmale wenigstens eines der Ansprüche 3 bis 12.
